# EUROPEAN PATENT APPLICATION

(11) **EP 1 087 154 A1**
(43) Date of publication of application: **28.03.2001**
(21) Application number: 99922690.5
(22) Date of filing: 14.05.1999
(51) Int. Cl.: F16H 39/10

(54) **HYDRAULIC TRANSMISSION**

(30) Priority: 15.06.1998 RU 98112152
(71) Applicant: Stroganov, Alexandr Anatolievich, St. Petersburg 195253 (RU); Zimnikov, Alexandr Nikolaevich, St. Petersburg 198239 (RU)
(72) Inventor: Stroganov, Alexandr Anatolievich, St. Petersburg 195253 (RU); Zimnikov, Alexandr Nikolaevich, St. Petersburg 198239 (RU)
(74) Representative: Hano, Christian, Dipl.-Ing.
(86) International application number: RU9900158
(87) International publication number: WO9966230

(57) **Abstract**

The present invention relates to volumetric hydraulic transmissions which are capable of modifying the rotating momentum to be transmitted. This adjustable volumetric and hydraulic transmission comprises a cinematic chain which is formed by the combination of two rotating hydraulic machines for providing a volumetric drive using hydraulic and mechanical connections. The cinematic chain comprises a driving member which is the beginning of the chain, a driven member which is the end of the chain, as well as a support member which is connected to the body through a support link. The support member is mounted so as to be capable of rotation relative to the body, and comprises a device for interrupting this support link. This hydraulic transmission further includes a device for blocking the rotation of the input and output members relative to each other.

## Description

This invention relates to the engineering and, in particular to continuously variable hydrostatic drives which are capable of changing a transferred torque, and can be used in transmissions of various machines instead of mechanical or hydromechanical gearboxes, and in some cases it can be used instead of a hydrodynamic torque converter and hydraulic clutch.

It is known that any continuously variable hydrostatic transmission comprises a driving member and a driven member which act as the beginning and the end of a kinematic chain formed by the interconnection of two rotor positive-displacement hydraulic machines by means of hydraulic and mechanical links. To change the driven member torque this kinematic chain should include at least one intermediate member (in the general case there can be more than one member) that is kinematically linked with the transmission housing, with the possibility of the torque transfer to the housing via this kinematic link. Such member will be called the support member and the link that transfers the torque from the said support member to the transmission housing will be called the support link hereinafter. The concept of the continuously variable hydrostatic drive implies that hydraulic machines included in the hydrostatic transmission are of a positive-displacement type and one or two of them are adjustable ones. In the general case they can be any rotor positive-displacement hydraulic machines. For example, the hydraulic machines can be of an axial-piston, radial-piston, screw, vane and gear type, with various combinations of the same. It is possible to identify the driving, driven and support members in any hydrostatic transmission.

The continuously variable hydrostatic transmission (the Russian Federation patent No 20622376 C1) including two axial-piston hydraulic machines, one of which is adjustable, was selected as the closest analogue. These two machines are interconnected by mechanical and hydraulic links into a kinematic chain with the beginning at the driving member, the end at the driven member and the interacting intermediate members in between them. One of the intermediate members is fixed rigidly to the transmission housing with the possibility of the torque transfer to it and acts as the support member. In this hydrostatic transmission the support member is the cylinder block of the adjustable hydraulic machine which is linked to its housing and cannot rotate. The distribution unit, that is the intermediate member that connects the inlet and outlet ports of both hydraulic machines and thus implements the hydraulic link between them, is in sliding contact with this block.

The given hydrostatic transmission operates as follows. As the input member consisting of the input shaft and the tilted swash plate begins to rotate, the intermediate member, that is the tilted swash plate of the first machine and the distribution unit of both hydraulic machines, begins to rotate too. If the output member, that is the output shaft, is stopped, and the displacement volumes of both hydraulic machines are equal, the idle mode is observed. The support member, that is the cylinder block of the adjustable hydraulic machine, in this case is immovable because it is rigidly fixed to the housing. The intermediate member, that is the cylinder block of the fixed displacement hydraulic machine which transfers the torque to the output member, is also immovable. Both hydraulic machines act as pumps and transfer to each other the equal volumes of fluid. In case the displacement volume of the adjustable hydraulic machine is decreased, the volume of the consumed and supplied fluid is decreased, too, the speed of rotation being the same. The fixed displacement hydraulic machine decreases its supply too, and because its displacement volume remains the same the intermediate member, that is the cylinder block of the fixed displacement hydraulic machine, used to decrease the fluid supply, begins to rotate in the same direction as the input member, and the difference in speeds is such that the volume of the fluid supply of the fixed displacement hydraulic machine is equal to the volume of the fluid supply of the adjustable hydraulic machine. The zero displacement volume of the adjustable hydraulic machine corresponds to the zero fluid supply. The fixed displacement hydraulic machine should also have the zero fluid supply, and this is possible only if the speeds of rotation of the input and the output members are equal. This mode will be called the direct drive mode hereinafter.

During operation in this mode the friction between the intermediate members, viz. between the support member that is the cylinder block of the adjustable hydraulic machine, and the distribution unit, hydraulic pistons and the tilted swash plate of the adjustable hydraulic machine is present.

The frame work of the invention is to accomplish the task of designing the continuously variable hydrostatic transmission the operation of which in the direct drive mode is free of friction between the members of the hydraulic machines that provides for the decrease of the mechanical wear of the displacers of the hydraulic machines, of the distribution unit wear, of the mechanical and hydraulic losses and, therefore, of the increase in the life time of the transmission.

The task is accomplished by designing the continuously variable hydrostatic transmission consisting of the kinematic chain, formed by the interconnection of two rotor positive-displacement hydraulic machines by hydraulic and mechanical links, which also includes the driving member, that is the beginning of the said chain, the driven member, that is the end of the said chain, and the support member, linked to the housing by the support link with the possibility of rotation of the said support member against the housing, and the device for interrupting the said support link. This design allows to decrease the mechanical losses due to friction and wear of the hydrostatic transmission members in the direct drive mode, because the support member, in case the support link is interrupted, begins to rotate by the force of friction together with the hydrostatic transmission members with which it is in contact, and the losses due to the friction between them will be practically absent. Besides, the hydrostatic transmission includes the locking device that prevents the rotation of the input and output members against each other. Locking the rotation of the input and output members against each other in the direct drive mode, in case the support link is interrupted, allows to completely eliminate the hydraulic and mechanical losses due to friction between the members of the hydraulic machines, because all of them rotate with the equal speed against the housing, and there is no movement between them.

In this particular case of accomplishing the invention the hydraulic machines included into hydrostatic transmission are of axial-piston type and one of them is adjustable. In the general case they can be any rotor positive-displacement hydraulic machines. For example, the hydraulic machines can be of axial-piston, radial-piston, screw, vane and gear type, with various combinations of the same.

The invention is described below by way of one particular example and the attached drawings of which:

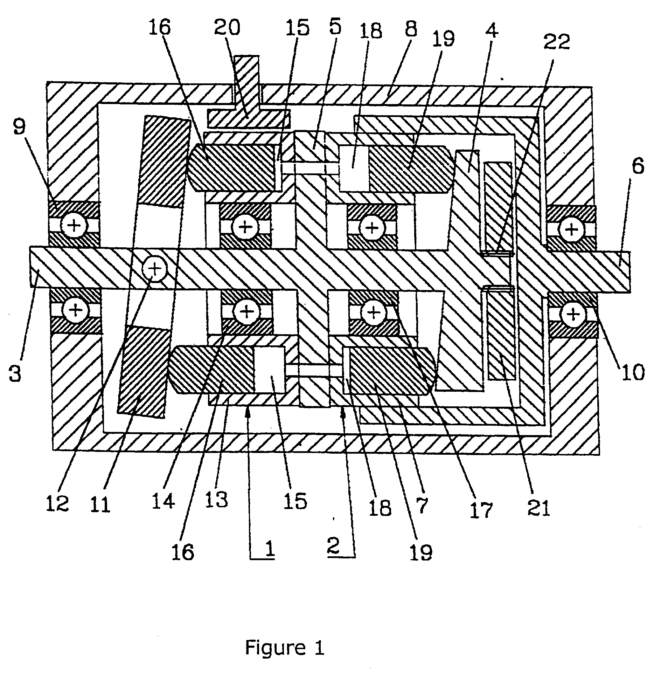

Figure 1 is the longitudinal section of the continuously variable hydrostatic transmission.

The continuously variable hydrostatic transmission consists of a variable displacement axial-piston hydraulic machine 1 and a fixed displacement axial-piston hydraulic machine 2, which are interconnected by hydraulic and mechanical links into a kinematic chain, the beginning of which at the driving member comprises the input shaft 3, the tilted swash plate 4 and the distribution unit 5, and the end of which at the driven member comprises the output shaft 6 and the cylinder block 7. The input shaft 3 is mounted in the housing 8 on the bearing 9, and the output shaft is mounted in the housing 8 on the bearing 10. The input shaft 3 is included in a variable displacement axial-piston hydraulic machine 1 that also consists of the tilted swash plate 11 mounted on the input shaft 3 by the axis 12 with the possibility to change the tilt in relation to the input shaft 3 and the possibility of the synchronous rotation with it. Besides, the variable displacement axial-piston hydraulic machine 1 includes the cylinder block 13 that is mounted on the input shaft 3 by the bearing 14 with the possibility of rotation against this shaft as well as against the housing 8. The cylinders 15 and the pistons 16 which contact with the tilted swash plate 11 are inside the cylinder block 13. The cylinder block 13 contacts with the distribution unit 5 that implements the hydraulic link between the hydraulic machines 1 and 2 and is made in the form of a flat disk mounted on the input shaft 3 as an integral part of the said shaft, thus providing the possibility of the synchronous rotation with it. The distribution unit 5 also contacts with the cylinder block 7 of the hydraulic machine 2 that contains the tilted swash plate 4 mounted on the input shaft 3 as an integral part of the said shaft, thus providing the possibility of the synchronous rotation with it. The cylinder block 7 is mounted on the input shaft 3 by means the bearing 17 with the possibility of rotation against this shaft as well as the housing 8. The cylinders 18 and the pistons 19 which contact with the tilted swash plate 4 are inside the cylinder block 7. In addition the hydrostatic transmission contains the device for interruption of the support link 20, that is made in this particular case in the form of the brake element fixed to the housing 8 and capable to lock and unlock the rotation of the support member against the housing 8 and thus to implement or interrupt the link between the support member and the housing 8. In this particular case the cylinder block 13 of the hydraulic machine 1 acts as the support member. The hydrostatic transmission also includes the device for locking the rotation of the input and output members against each other that is made in the form of the clutch 21 mounted on the input shaft 3 by the spline connection 22 with the possibility of movement along the input shaft 3 and with the possibility of contact with the output shaft 6.

The hydrostatic transmission operates as follows. As the input member consisting of the input shaft 3, the distribution unit 5 and the tilted swash plate 4 begins to rotate, the tilted swash plate 11 begins to rotate too. If the output member consisting of the output shaft 6 and the cylinder block 7 of the hydraulic machine 2 is stopped, and the displacement volumes of both machines are equal, the idle mode is observed. The cylinder block 13 of the hydraulic machine 1, which acts in our case as the support member, does not rotate because it is locked against the rotation by means of the device for interruption of the support link 20, that is made in the form of the brake element fixed on the housing 8 and contacting with the cylinder block 7 thus preventing its rotation against the housing 8 and implementing its support link with the housing 8. Both machines act as pumps and transfer to each other the equal volumes of fluid.

In case the displacement volume of the variable displacement hydraulic machine 1 is decreased, the volume of the consumed and supplied fluid is decreased too at the speed of rotation being the same. The fixed displacement hydraulic machine 2 decreases its supply too, and because its displacement volume remains the same the output shaft 6, to decrease the fluid supply, begins to rotate in the same direction as the input shaft 3. The zero displacement volume of the variable displacement hydraulic machine 1 corresponds to the zero fluid supply. The fixed displacement hydraulic machine 2 should also have the zero fluid supply, and this is possible only if the speed of rotation of the input shaft 3 and the output shaft 6 are equal, i.e. in the direct drive mode. In this mode of operation the device for interruption of the support link 20, that is made in the form of the brake element, interrupts the support link of the cylinder block 13 with the housing 8, i.e. the brake element moves away from the cylinder block 13 and breaks the contact with it, thus allowing it to rotate against the housing 8 together with other members of the hydraulic machine with which it interacts. In this particular case the cylinder block 13 interacts with the flat disk 5 and with the tilted swash plate 11 through the pistons 16. The forces of friction between them will tend to force them to rotate with the equal angular velocities against the housing 8 thus decreasing the losses due to friction between them. For the complete elimination of hydraulic and mechanical losses due to friction between the members of the both hydraulic machines in the direct drive mode the clutch 21 that is the device for locking the rotation of the input and output members moves along the spline connection 22 and comes into contact with the output shaft 6 preventing the possibility of rotation of the output shaft 6 against the input shaft 3. Thus in the direct drive mode all members of both hydraulic machines rotate with the equal speed against the housing 8 and there are no losses due to friction between them. (The drive of the tilted swash plate 11, the drive of the clutch 21, the drive of the device for the interruption of the support link 20 is not shown in the drawing to make it less complicated).

In order to leave the direct drive mode it is necessary to return the clutch 21 and the device for interruption of the support link 20 to their initial positions. Then the hydrostatic transmission operates in its regular mode.

## Claims

1. The continuously variable hydrostatic transmission containing the kinematic chain which is formed by interconnection of two rotor positive-displacement hydraulic machines by means of hydraulic and mechanical links, containing the driving member, the driven member and the support member linked to the housing by the support link, *the novelty* of which is that the support member is mounted with the possibility of its rotation against the housing and contains the device for the interruption of the support link.

2. The transmission as defined in Claim 1 *the novelty* of which is the device for locking the rotation of the input and output members against each other.
